# EUROPÄISCHE PATENTANMELDUNG

(11) **EP 1 106 884 A2**
(43) Veröffentlichungstag der Anmeldung: **13.06.2001**
(21) Anmeldenummer: 00890353.6
(22) Anmeldetag: 29.11.2000
(51) Int. Cl.: F16K 47/10

(54) **Drosselrückschlagventil und Verfahren zu dessen Herstellung**

(30) Priorität: 07.12.1999 AT 206299
(71) Anmelder: Hoerbiger Hydraulik GmbH, 86956 Schongau (DE)
(72) Erfinder: Stolle, Klaus, 86972 Altenstadt (DE); Hollerbach, Bernhard, 86989 Steingaden (DE)
(74) Vertreter: Laminger, Norbert, Mag.

(57) **Zusammenfassung**

Ein Drosselrückschlagventil wird vorgeschlagen, bestehend aus je einem Rückschlagventil und einer Drossel, die strömungstechnisch gesehen parallel geschaltet sind. Um ein einfach herstellbares und baulich möglichst einfach und kompakt gestaltetes Ventil zu erhalten, bei dem selbst bei geringsten Durchmessern die Gefahr der Verstopfung möglichst gering ist, ist das Rückschlagventil selbst in genau definierter Weise undicht ausgeführt und stellt die Undichtigkeit damit die Drossel dar.

Beim Verfahren zur Herstellung eines derartigen Drosselrückschlagventils wird in einem Gehäuse ein Hohlraum mit einem vorzugsweise ebenen Ventilsitz (2) ausgearbeitet, in welchen Hohlraum anschließend das Ventilelement (4) und ein das Ventilelement in Richtung auf den Ventilsitz beaufschlagendes elastisches Element (3) eingesetzt und darin fixiert werden. Zur einfachen und raschen Herstellung der gewünschten Undichtigkeit wird dabei vor dem Einsetzen des Ventilelementes eine Ausnehmung (6) im Ventilsitz angefertigt.

## Beschreibung

Die Erfindung betrifft ein Drosselrückschlagventil, bestehend aus einem Rückschlagventil mit einem Schließelement und einem Ventilsitz sowie einer richtungsabhängigen Drossel, die in Öffnungsrichtung des Rückschlagventils im wesentlichen frei durchströmbar ist, und ein Verfahren zur Herstellung eines derartigen Drosselrückschlagventils, wobei in einem Gehäuse ein Hohlraum mit einer sprunghaften Durchmesseränderung ausgearbeitet wird, welche Durchmesseränderung einen vorzugsweise ebenen Ventilsitz mit einer scharfen Kante definiert, wobei in den Hohlraum anschließend das Ventilelement und ein das Ventilelement in Richtung auf den Ventilsitz beaufschlagendes elastisches Elemente eingesetzt und darin fixiert werden.

Zur Erzielung von Sicherheitsfunktionen beispielsweise bei Cabrio-Verdecken oder automatisch betätigten Verdeckkastendeckeln, Heckdeckeln, Motorraumklappen od. dgl. werden in das hydraulische System derartige Drosselrückschlagventile eingebaut. Wenn z. B. bei einem Fahrzeug der Strom schlagartig ausfällt und somit die Magnetventile nicht mehr bestromt sind, fällt das Verdeck oder aus starren Elementen bestehende Dach in sich zusammen. Um ein langsames Zusammenfallen des Cabriodachs sicherzustellen und damit die Verletzungsgefahr zu minimieren, werden hier Rückschlagventile mit sehr kleinen Durchmessern eingesetzt. Um Bewegungen von Deckeln langsamer zu gestalten werden Drosselrückschlagventile eingesetzt. Die Hydraulikpumpe fördert einen konstanten Volumenstrom und wenn dieser jedoch für die gewünschte Funktion zu hoch ist, wird mit Hilfe eines Drosselrückschlagventils der Volumenstrom hinter dem Ventil reduziert.

Es sind Drosselrückschlagventile bekannt, die in paralleler Anordnung auf der einen Seite ein Rückschlagventil und auf der anderen Seite eine Drossel aufweisen. In der einen Richtung kann das Medium ungehindert durch das Rückschlagventil strömen, in der Gegenrichtung muss das Medium durch eine Drossel zurückfließen. Die Drosseln bestehen dabei herkömmlicherweise aus Düsen oder Blenden, diese sind hydraulische Elemente mit kleinen Querschnitten, die in der Regel durch Bohrungen realisiert sind. In diesen Bohrungen setzen sich aber Rückstände aus dem Medium ab und verändern diesen Querschnitt und damit auch die Funktion, führen sogar zum Ausfall des gesamten Systems. Überdies lassen sich die Bohrungen nur bis zu einem gewissen Durchmesser, bis minimal ca. 0,3 mm, wirtschaftlich fertigen. Bei Durchmesser um ca. 0,1 mm und kleiner nehmen die Kosten für die Herstellung und auch für die Filterung des Mediums erheblich zu.

Die DE 33 00 763 A zeigt dabei eine hydraulische Einrichtung mit einem Drosselventil mit kapillarer Bohrung oder Kerbe im Ventilsitz, jedoch einem hinter der Drossel angeordneten, d.h. davon baulich getrennten Rückschlagventil. In der EP 0 307 739 ist eine Entlüftungsvorrichtung für Kraftstoffanlagen beschrieben, bei welcher in einer Ausführungsform auch ein Ventil mit gekerbtem Ventilsitz beschrieben ist, welcher aber nicht der Ventilsitz eines ebenfalls vorhandenen, jedoch baulich getrennt ausgeführten Rückschlagventils ist. Ein Drosselventil mit Kerbe im Ventilelement ist auch in der DE 35 02 021 beschrieben, wobei aber die wesentliche Drosselfunktion durch einen Spalt zwischen der Aufnahmebohrung für das Ventilelement und diesem Ventilelement gegeben und daher in beiden Durchströmungsrichtungen gegeben ist. Die Drossel und das Ventil sind also strömungstechnisch gesehen in Serie geschaltet.

Im hydraulischen Speicherladeventil der DE 37 44 178 ist u.a. eine Kugel-Bohrung-Anordnung integriert, welche mit ihrer frei beweglichen Ventilkugel und kleinen Kerben in ihrem sanft geschwungen verlaufenden Ventilsitz die Funktion eines Drosselrückschlagventils verwirklicht. Diese Anordnung bietet aber nicht die für Anwendungen etwa bei Hydrauliksystemen in Kraftfahrzeugen notwendige genau definierte Schließstellung und damit auch die immer gleiche Drosselwirkung. Auch muss im sanft verlaufenden Ventilsitz mit höherem Aufwand und Kosten eine längere Nut als Undichtigkeit ausgearbeitet werden, um bei dem inhärent ungenauen Aufliegen der Ventilkugel doch noch eine Undichtigkeit zu bieten. Weiters sind mit der bekannten Ausführung die für Anwendung in hydraulischen Verdecksystemen oder Deckelbetätigungssystemen notwendige die Schnelligkeit und Exaktheit der Schaltvorgänge des Rückschlagventils und die Sicherheit der Schließwirkung nicht gewährleistet.

Die Aufgabe der vorliegenden Erfindung war daher ein Drosselrückschlagventil, welches unter Vermeidung der obigen Nachteile einfach herstellbar und baulich möglichst einfach und kompakt gestaltet ist, auch unter extremen Bedingungen und mechanischen Belastungen schnell und exakt schaltet und selbst bei geringsten Durchmessern die Gefahr der Verstopfung möglichst gering hält.

Zur Lösung dieser Aufgabe ist erfindungsgemäß vorgesehen, dass das Ventilelement des Rückschlagventils durch ein elastisches Element in Schließrichtung gegen eine den Ventilsitz bildende scharfe Kante beaufschlagt ist und das Rückschlagventil selbst lediglich im Bereich der Dichtkante in an sich bekannter Weise in genau definierter Weise undicht ausgeführt ist. Das gestattet eine bedeutende Verkleinerung der Dimensionen des Drosselrückschlagventils, das somit auch direkt in andere Bauteile des Systems eingebaut oder darin integriert sein kann, beispielsweise in Pumpenträger oder Pumpengehäuse, in Hohlschrauben - auch jener von Hydraulikanschlüssen - und auch als in vorgegebene Bohrungen einsetzbare Patronen. Da bei jedem Öffnen des Rückschlagventils der gesamte Querschnitt durchgespült wird, werden dabei allfällige Verunreinigungen weggespült und somit die Funktionssicherheit wesentlich erhöht. Als Vorteile der mit Einkerbungen versehenen scharfen Kante als Ventilsitz sind die genau definierte Schließstellung und damit auch die immer gleiche Drosselwirkung sowie die in eine Dichtkante viel einfacher und genauer im Durchfluss anpassbar einzuarbeitenden Einkerbungen anzusehen. Dies gilt speziell für die Anwendung in Automobil-Hydrauliksystemen, bei welchen vielen Vibrationen und Stöße auftreten, welche die Lage eines frei und nicht durch eine Schließfeder beaufschlagten Schließelementes gegenüber einem nicht ausreichend scharf definierten Ventilsitz nachteilig beeinflussen können. Weiters ist für die Anwendung in hydraulischen Verdecksystemen oder Deckelbetätigungssystemen die Schnelligkeit und Exaktheit der Schaltvorgänge des Rückschlagventils und die Sicherheit der Schließwirkung von wesentlicher Bedeutung, welche durch die scharfe Kante als Ventilsitz einerseits und die Schließfeder andererseits gewährleistet sind.

In baulich einfacher Weise ist gemäß einem weiteren Merkmal der Erfindung vorgesehen, dass der Ventilsitz des Rückschlagventils mit einer Ausnehmung versehen ist. Eine derartige Ausnehmung ist mit ausreichender Genauigkeit und unabhängig von der baulichen Ausführung des Schließelementes des Rückschlagventils relativ einfach herstellbar und bei Verwendung entsprechender Materialien auch sehr haltbar.

Vorteilhafterweise ist dabei der Ventilsitz eben ausgeführt und mit zumindest einer Kerbe versehen. Derartige Kerben sind leicht mittels scharfkantiger Werkzeuge mit großer Genauigkeit und insbesonders in scharfen Dichtkanten rasch, einfach und sehr genau zu fertigen.

Eine weitere Aufgabe war auch ein Verfahren zur Herstellung eines Drosselrückschlagventils nach einem der vorhergehenden Absätze, welches zur einfachen und raschen Herstellung dadurch gekennzeichnet ist, dass vor dem Einsetzen des Ventilelementes eine Ausnehmung an der Kante des Ventilsitzes angefertigt wird.

Vorteilhafterweise wird dabei mit einem Formwerkzeug eine Kerbe in die Kante des Ventilsitzes eingedrückt, welche Kerbe leicht und rasch mit großer Genauigkeit herstellbar ist.

Gemäß einem weiteren Merkmal der Erfindung wird am fertig zusammengesetzten Ventil eine Durchflussmengenmessung, vorzugsweise mit Luft, durchgeführt, so dass der gewünschte Drosseleffekt mit relativ geringem Aufwand überprüfbar ist.

In der nachfolgenden Beschreibung soll die Erfindung anhand der beigefügten Zeichnungen eines bevorzugten Ausführungsbeispiels näher erläutert werden.

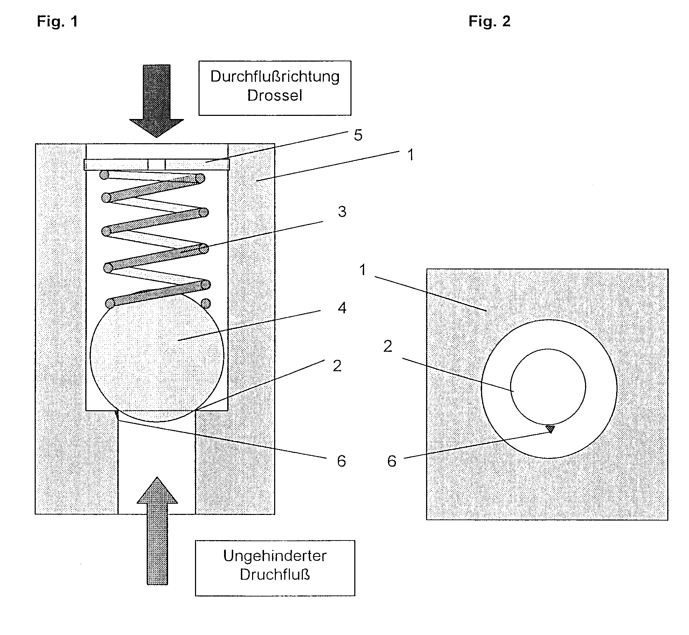

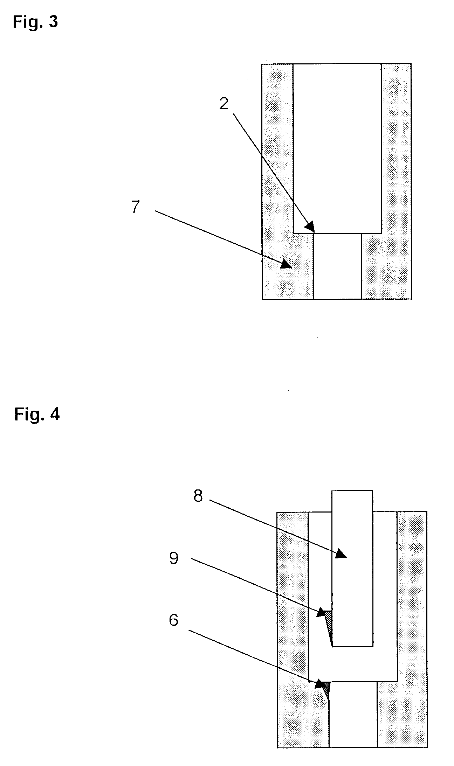

Die Fig. 1 zeigt einen Längsschnitt durch ein komplettes erfindungsgemäßes Drosselrückschlagventil, Fig. 2 ist eine Draufsicht auf den Ventilsitz des Drosselrückschlagventils der Fig. 1, Fig. 3 ist ein Längsschnitt durch das Gehäuse des Drosselrückschlagventils der Fig. 1 und 2 in einem frühen Stadium des Herstellungsvorganges und Fig. 4 ist eine schematische Darstellung des Schrittes des Eindrückens der Kerbe in den Ventilsitz während des Herstellungsverfahrens.

In einem Gehäuse 1 für das Drosselrückschlagventil, welches auch Teil einer größeren Struktur sein kann, beispielsweise Teil eines Pumpengehäuses oder Pumpenträgers, oder welches in Form einer Hohlschraube vorliegen kann, ist ein vorzugsweise zylindrischer Hohlraum ausgearbeitet, der an einer Stelle eine vorzugsweise sprunghafte Durchmesseränderung aufweist, welche durch ihre Kante einen ebenen, vorzugsweise kreisförmigen Ventilsitz 2 definiert. Durch ein elastisches Element, vorzugsweise eine Schraubenfeder 3, wird ein Ventilelement in Form einer Kugel 4 gegen diesen Ventilsitz 2 hin mit einer definierten Schließkraft beaufschlagt und sperrt daher den Durchfluss durch das Drosselrückschlagventil parallel zu dieser Kraftrichtung. Die Schließfeder 3 wird im Gehäuse 1 durch einen Anschlag 4 fixiert.

Um nun in der Schließrichtung des Drosselrückschlagventils eine gezielte Undichtigkeit hervorzurufen und somit einen gedrosselten Durchfluss in Schließrichtung zu ermöglichen, ist in den Ventilsitz 2 an zumindest einer Stelle seines Umfanges eine Ausnehmung, vorzugsweise eine Kerbe 6, vorgesehen. Dies entspricht einer sehr kleinen Bohrung, ist aber wesentlich einfacher und genauer herzustellen und lässt geringe Durchflussmengen zu, z. B bei Drücken von 180 bar Hydraulikölströme bis hinunter zu 0,002 l/min. Sich allenfalls in der Ausnehmung 6 festsetzende Verschmutzungen werden beim Öffnen des Ventilelementes 4 weggespült, so dass im nachfolgenden, wieder geschlossenen Zustand des Drosselrückschlagventils wieder die genau definierte Drosselwirkung sichergestellt ist.

Zur Herstellung des erfindungsgemäßen Drosselrückschlagventils wird in einen Gehäuserohling 7 eine Passage mit sich an einer Stelle, welche damit den Ventilsitz 2 definiert, sprunghaft änderndem Durchmesser ausgearbeitet (siehe Fig. 3). Anschließend wird ein Werkzeug 8 mit einem seitlichen Keil 9 in Längsrichtung in den Hohlraum eingeführt bis der Keil 9 eine Kerbe 6 mit genau definierter Größe, gegeben durch die Größe des Keils 9 und die auf das Material des Ventilsitzes 2 abgestimmte Anpresskraft, in den Ventilsitz 2 eingedrückt hat. Anschließend werden die übrigen Komponenten des Drosselrückschlagventils eingesetzt und fixiert. Zuletzt kann vorteilhafterweise noch ein Prüfschritt folgen, bei dem der Drosselquerschnitt durch Durchströmung des geschlossenen Drosselrückschlagventils mit vorzugsweise Luft kontrolliert wird.

## Patentansprüche

1. Drosselrückschlagventil, bestehend aus einem Rückschlagventil mit einem Schließelement und einem Ventilsitz sowie einer richtungsabhängigen Drossel, die in Öffnungsrichtung des Rückschlagventils im wesentlichen frei durchströmbar ist und in Schließrichtung des Rückschlagventils gedrosselt durchströmbar ist, dadurch gekennzeichnet, dass das Schließelement des Rückschlagventils durch ein elastisches Element in Schließrichtung gegen eine den Ventilsitz bildende, scharfe Dichtkante beaufschlagt ist und das Rückschlagventil selbst im Bereich der Dichtkante in an sich bekannter Weise in genau definierter Weise undicht ausgeführt ist und die Undichtigkeit damit die Drossel darstellt.

2. Drosselrückschlagventil nach Anspruch 1, dadurch gekennzeichnet, dass der Ventilsitz (2) des Rückschlagventils mit einer Ausnehmung (6) versehen ist.

3. Drosselrückschlagventil nach Anspruch 2, dadurch gekennzeichnet, dass der Ventilsitz (2) eben ausgeführt und mit zumindest einer Kerbe (6) versehen ist.

4. Verfahren zur Herstellung eines Drosselrückschlagventils nach einem der Ansprüche 1 bis 3, wobei in einem Gehäuse (1) ein Hohlraum mit einem vorzugsweise ebenen Ventilsitz (2) ausgearbeitet wird, in welchen Hohlraum anschließend das Ventilelement (4) und ein das Ventilelement in Richtung auf den Ventilsitz beaufschlagendes elastisches Element (3) eingesetzt und darin fixiert werden, dadurch gekennzeichnet, dass vor dem Einsetzen des Ventilelementes (4) eine Ausnehmung (6) im Ventilsitz (2) angefertigt wird.

5. Verfahren nach Anspruch 4, dadurch gekennzeichnet, dass mit einem Formwerkzeug (8) eine Kerbe in die Kante des Ventilsitzes eingedrückt wird.

6. Verfahren nach einem der Ansprüche 4 oder 5, dadurch gekennzeichnet, dass am fertig zusammengesetzten Ventil eine Durchflussmengenmessung, vorzugsweise mit Luft, durchgeführt wird.
